# EUROPEAN PATENT SPECIFICATION

(11) **EP 3 885 417 B1**
(45) Date of publication and mention of the grant of the patent: **03.04.2024**
(21) Application number: 19886606.3
(22) Date of filing: 17.10.2019
(51) Int. Cl.: C09D 201/00, C09D 7/44, C09D 163/00, C08L 91/06, C09D 191/06, C08J 3/12

(54) **POWDERY THIXOTROPY-IMPARTING AGENT FOR NON-AQUEOUS PAINT, AND NON-AQUEOUS PAINT COMPOSITION HAVING SAME ADDED**
PULVERIGES THIXOTROPIEVERLEIHENDES MITTEL FÜR NICHTWÄSSRIGE LACKE UND NICHTWÄSSRIGE LACKZUSAMMENSETZUNG DAMIT
AGENT CONFÉRANT UNE THIXOTROPIE EN POUDRE POUR PEINTURE NON AQUEUSE, ET COMPOSITION DE PEINTURE NON AQUEUSE À LAQUELLE IL A ÉTÉ AJOUTÉ

(30) Priority: 20.11.2018 JP 2018217672
(43) Date of publication of application: 29.09.2021
(73) Proprietor: Kyoeisha Chemical Co., Ltd., Osaka-shi, Osaka 541-0054 (JP)
(72) Inventor: MATSUYAMA, Takanori, Nara-shi, Nara 630-8453 (JP); TAKAGI, Masahiro, Nara-shi, Nara 630-8453 (JP); NODA, Shu, Nara-shi, Nara 630-8453 (JP); KATAOKA, Yousuke, Nara-shi, Nara 630-8453 (JP)
(74) Representative: Casalonga
(86) International application number: PCT/JP2019/040973
(87) International publication number: WO 2020/105332

(56) References cited:
- WO-A1-2018/146114
- GB-A- 1 461 355
- JP-A- H05 247 387
- JP-A- H06 166 838
- JP-A- S63 275 890
- JP-A- 2013 049 761
- JP-B1- S4 928 108
- US-A- 3 937 678
- US-A1- 2008 318 821

## Description

### Technical Field

The present invention relates a powdery thixotropy-imparting agent for a non-aqueous paint, which enables to impart excellent thickening properties and/or liquid dripping prevention properties and thixotropy properties into a non-aqueous paint regardless of the type and the presence or absence of a solvent such as an organic solvent or an alcoholic solvent included in the non-aqueous paint.

### Background of the Art

A thixotropy-imparting agent is used to be preliminarily dispensed into a paint composition so that the paint composition is applied for being a thick layer and prevents from liquid dripping when applying it on a vertical surface. The thixotropy-imparting agent makes the paint composition easy flow at a high shearing speed field before or during applying it and makes the paint composition difficult flow at a low shearing speed field after applying it.

Conventionally, montmorillonite derivatives, polymerized oils, hydrogenated castor oils, emulsifying polyethylene waxes, polyester polymers, polyamide polymers, polyurethane polymers or diamide compounds were used as the thixotropy-imparting agent.

When those conventional thixotropy-imparting agents are dispensed into the non-aqueous paint including the solvent such as non-alcoholic organic solvent or alcoholic solvent and so on, they express the liquid dripping prevention properties in the non-aqueous paint due to the presence of those solvent. Accordingly, the paint composition can be applied to become a thick layer on the surface being to be applied. Or the paint composition prevents from liquid dripping when applying it on a vertical surface.

For example, Patent Document 1 discloses that a dripping prevention agent for non-aqueous paint consists of polyamide, polyester or polyurethane as dimer acids or derivatives thereof obtained by dimerization of unsaturated fatty acids having 18 carbon atoms, in which dimethyl amino groups or diethyl amino groups is introduced at 30-100 % of terminals of the molecules thereof.

Patent document 2 discloses a thixotropy-imparting agent which is prepared by reacting a reaction intermediate of 12-hydroxy stearic acid and fatty acid of castor oil, and polyamine with polyisocyanate.

Patent Document 3 discloses a dripping prevention agent which is prepared by swelling polyamides consisting of fatty acids having 6-22 carbon atoms and aliphatic polyamines into reactive or unreactive diluents.

Patent Document 4 discloses a composition containing a diamide compound (A), a diamide compound (B) and a carboxyl group-containing polyolefin wax (C). The composition can further contain 1 wt. % or more hydrogenation castor oil as dropping prevention agent component, as well as a polyamide or a polyester.

Patent Document 5 discloses an anti-sagging, dripping prevention agent containing an amidated compound (B) and an urethane product (A).

Patent Document 6 discloses a diamide-polyolefin wax mixture useful as rheology control agent for non-aqueous composition, wherein the mixture comprises (a) 20 to less than 40 wt.% at least one diamide; (b) more than 60-80 wt.% at least one carboxy group-containing polyolefin wax, which has an acid number more preferably 8 to 35.

Patent Document 7 discloses a rheological control agent comprising a particulate blend of hydrogenated castor oil and an oligomeric polyamide derived from the reaction of hydroxystearic acid, one or more saturated aliphatic alpha-omega di primary diamines containing 2, 4, 6, 8 or 10 carbon atoms and one or more saturated aliphatic alpha-omega dicarboxylic acids containing from 2 to 12 carbon atoms and/or hydrogenated dimer acids.

Patent Document 8 discloses a powder coating material containing a wax mixture with reduced dust formation, comprising two or more components selected from the group consisting of A, B, C and D, component A acting as an auxiliary and comprising one or more polyethylene glycols or polyethylene glycol derivatives having molecular weight Mw of 2700 to 45 000 g/mol., component B is one or more amide waxes, component C is one or more hydrocarbon waxes, and component D is one or more oxidized long-chain hydrocarbon waxes, wherein the amide waxes are preferably reaction products of long-chain amines such as, for example, hydrogenated tallow amine, stearylamine, palmitylamine, cocoamine and long-chain fatty acids or hydroxy-fatty acids and/or their mixtures.

However, the conventional thixotropy-imparting agent sometimes cannot achieve sufficient thixotropy properties, when the paint composition including it without the non-alcoholic organic solvent and the alcoholic solvent is applied on the surface to be applied to become the thick layer or is applied on the vertical surface. Therefore, it does not enable to prevents from liquid dripping completely.

### [Prior Art Document]

### [Patent Document]

[Patent Document 1] JP2003-183583A
[Patent Document 2] JP2008-115199A
[Patent Document 3] JP1994-166838A
[Patent Document 4] JP2013-49761A
[Patent Document 5] JP-A-5-247387
[Patent Document 6] WO2018/146114 A1
[Patent Document 7] GB 1461355 A
[Patent Document 8] US 2008318821 A1

### Summary of the Invention

### Problems to be Solved by the Invention

The present invention was made in the view of solving the above described problems, its objects are to provide a powdery thixotropy-imparting agent for a non-aqueous paint, a method for preparing it, and a non-aqueous paint composition including it. The powdery thixotropy-imparting agent can improve and modify physical properties of the paint composition to impart more excellent thickening properties and/or liquid dripping prevention properties and thixotropy properties by adding a little of it into a non-aqueous paint including solvents or including no solvent than prior arts, regardless of the type and the presence or absence of a solvent such as a non-alcoholic organic solvent or an alcoholic solvent included in the non-aqueous paint.

The inventors assiduously investigated to solve the above-mentioned problems. And finally, the inventors found to solve the problems when preparing a powdery thixotropy-imparting agent with using a mixture which is obtained by mixing a specific amide compound (A), a non-amide wax component (B) except for an amide ingredient, and a polymer (C) having a polar functional group, they completed the present invention.

### Means for Solving Problems

The present invention for achieving the objects is a claimed powdery thixotropy-imparting agent for a non-aqueous paint comprising;
an amide compound (A) in which a primary diamine having 2-8 carbon atoms, and a hydrogenated castor oil fatty acid and/or aliphatic monocarboxylic acid having 4-18 carbon atoms, are condensed,
a non-amide wax component (B) which is selected from the group consisting of a microcrystalline wax, hydrogenated castor oil and a polyolefin wax, has at least 70 °C of a softening point and an acid value of 10 or less, and
a polymer (C) having a polar functional group selected from the group consisting of a hydroxyl group, a carboxyl group or an amino group, and a substituent having any ones of them, which is selected from the group consisting of oxidated poly olefine, polyol, polyether, poly-carboxylic acid, polyamine, polyester, polyphosphoric acid, and polysulfonic acid, and has 1,000- 100,000 of weight average molecular weight based on polystyrene conversion, and
the powdery thixotropy-imparting agent for imparting thickening properties and/or liquid dripping prevention properties, and thixotropic properties and wherein
the amide compound (A) is 1-95 % by mass, the non-amide wax component (B) is 1-95 % by mass and the polymer (C) having the polar functional group is 0.1-10% by mass, all which are based on mass by the sum of the amide compound (A), the non-amide wax component (B) and the polymer (C) having the polar functional group, and
the mixture of the amide compound (A), the non-amide wax component (B) and the polymer (C) having the polar functional group, has an acid value of 30 or less and an amine value of 20 or less.

The powdery thixotropy-imparting agent is used in a non-aqueous paint which contains any one of solvents selected from the group consisting of non-alcoholic organic solvents and alcohol solvents or contains no solvent.

The powdery thixotropy-imparting agent preferably contains powder consisting of a fusion-mixed product of the amide compound (A) and the non-amide wax component (B) and the polymer (C) having the polar functional group.

In the powdery thixotropy-imparting agent for the non-aqueous paint, for example, the primary diamine is ethylene diamine, 1,4-diaminobutane, hexamethylene diamine and/or xylene diamine.

The present invention for achieving the objects is a method for preparing a powdery thixotropy-imparting agent for a non-aqueous paint comprising;
a step of mixing through heating and melting an amide compound (A) which a primary diamine having 2-8 carbon atoms, and a hydrogenated castor oil fatty acid and/or an aliphatic monocarboxylic acid having 4-18 carbon atoms are condensed, and a non-amide wax component (B) which is selected from the group consisting of a microcrystalline wax, hydrogenated castor oil and a polyolefin wax, has at least 70 °C of a softening point and an acid value of 10 or less, and a polymer (C) having a polar functional group selected from the group consisting of a hydroxyl group, a carboxyl group or an amino group, and a substituent having any ones of them, which is selected from the group consisting of oxidated poly olefine, polyol, polyether, poly-carboxylic acid, polyamine, polyester, polyphosphoric acid, and polysulfonic acid, and has 1,000-100,000 of weight average molecular weight based on polystyrene conversion, and then,
a step of cooling them to become a cooling product thereof and
a step of pulverizing the cooling product to prepare the powdery thixotropy-imparting agent for the non-aqueous paint,
   wherein
the amide compound (A) is 1-95 % by mass, the non-amide wax component (B) is 1-95 % by mass and the polymer (C) having the polar functional group is 0.1-10% by mass, all which are based on mass by the sum of the amide compound (A), the non-amide wax component (B) and the polymer (C) having the polar functional group, and
the mixture of the amide compound (A), the non-amide wax component (B) and the polymer (C) having the polar functional group, has an acid value of 30 or less and an amine value of 20 or less.

The present invention for achieving the objects is a non-aqueous paint composition comprising;
the powdery thixotropy-imparting agent for the non-aqueous paint according to claim 1 and nonaqueous-type paint ingredients, and
further comprising any one of solvents selected from the group consisting of non-alcoholic organic solvents and alcohol solvents or comprising no solvent.

### Effects of the Invention

The powdery thixotropy-imparting agent for the non-aqueous paint of the present invention is blended a little into a paint composition including non-aqueous solvent or a paint composition including no solvent. Thereby, the physical properties of the paint composition can be modified and improved by imparting more excellent thickening properties and/or liquid dripping prevention properties and thixotropy properties into a non-aqueous paint than the prior arts regardless of the type and the presence or absence of a solvent such as a non-alcoholic organic solvent or an alcoholic solvent included in the non-aqueous paint composition.

According to the method for preparing the powdery thixotropy-imparting agent for the non-aqueous paint, the agent can be conveniently manufactured efficiently through simple steps. And the agent having excellent quality, which achieves to impart the thickening properties and/or the liquid dripping prevention properties and the thixotropy properties into the non-aqueous paint, can be manufactured when mass-producing.

The non-aqueous paint composition of the present invention is easy to express fluidity thereinto under a state of a high shearing-speed before or during painting the paint composition and is hard to express fluidity thereinto under a state of a low shearing-speed after painting the paint composition. Therefore, the non-aqueous paint composition can prevent liquid dripping when applying it on a surface to be applied to become thick layer or applying on a vertical surface.

### Mode for Carrying out the Invention

Hereunder, embodiments for carrying out the present invention will be explained in detail. However the scope of the present invention is not limited in those embodiment.

A powdery thixotropy-imparting agent for a non-aqueous paint of the present invention includes;
an amide compound (A) in which a primary diamine having a straight, branched and/or cyclic hydrocarbon chain of 2-8 carbon atoms and having free amino groups (-NH₂) on terminals or in middle of the hydrocarbon chain, and a hydrogenated castor oil fatty acid and/or an aliphatic monocarboxylic acid having a straight, branched and/or cyclic hydrocarbon chain of 2 or more carbon atoms, are condensed by dehydration to obtain it.
a non-amide wax component (B) as defined in the invention, and
a polymer (C) having a polar functional group as defined in the invention.

As the primary diamine having 2-8 carbon atoms, the examples thereof are a saturated aliphatic primary diamine such as ethylene diamine, 1,4-diaminobutane and hexamethylene diamine; or an aromatic primary diamine such as xylene diamine. Those may be solely used or plurally used after mixing thereof.

The hydrogenated castor oil fatty acid is a saturated fatty acid which is prepared by hydrogenating glyceride as castor oil and then hydrolyzing the obtained hardened castor oil. The castor oil is the glyceride as a nondrying oil which is obtained from seeds of Ricinus communis by milling. The glyceride of castor oil includes ingredients of fatty acids such as unsaturated fatty acids exemplified with 87% of ricinoleic acid, 7% of oleic acid and 3% of linolic acid, and 3% of saturated fatty acids exemplified with a little of palmitic acid and stearic acid.

The aliphatic monocarboxylic acid is exemplified with a fatty acid having a carboxyl acid moiety at a terminal thereof, and is exemplified more specifically with a saturated or unsaturated aliphatic carboxylic acid which has a straight, blanched and/or cyclic hydrocarbon chain having 2 or more preferably 4-18 carbon atoms and may have one or two hydroxyl groups. Examples thereof are a saturated aliphatic monocarboxylic acid such as lauric acid, myristic acid, palmitic acid and stearic acid; a saturated aliphatic monocarboxylic acid having a hydroxy group such as 12-hydroxy stearic acid; or an unsaturated aliphatic monocarboxylic acid such as oleic acid, linolic acid and linolenic acid. It may be a mixture including any one of them as a main ingredient and other aliphatic monocarboxylic acid, such as stearic acid for industrial usage.

The amide compound (A) is a compound prepared by dehydration of one mole of the fatty acid and 0.5 mole of the diamine under normal pressure or reduced pressure at 160-230 °C for 2-10 hours through presence of a catalysis if necessary. And the amide compound (A) having 20 or less of an acid value and an amine value is a compound which is a pale-yellow or a pale-brawn solid and has a melting point of 100-160 °C.

The non-amide wax component (B) is selected from the group consisting of a microcrystalline wax, hydrogenated castor oil and a polyolefin wax. The non-amide wax component (B) has a softening point of 70 °C or more preferably 70-120 °C, and an acid value of 10 or less, preferably 0-5.

If the non-amide wax component (B) has the softening point of less than 70 °C, the non-amide wax component (B) may be dissolved in a paint or an ink due to generated heat capacity when preparing the paint or the ink in case of adding the thixotropy-imparting agent thereinto, which is obtained by mixing the amide compound (A), the non-amide wax component (B) and the polymer (C) having the polar functional group. Therefore, appearance of the coating layer may be deteriorated or stickiness may be caused by finger-touch, because the non-amide wax component (B) may be easy to blead out on the surface of the paint or the ink,

If the non-amide wax component (B) has an acid value more than 10, the sufficient thixotropy properties may not be expressed when the paint composition including no solvent or no alcoholic solvent is applied on the surface to be applied so as to become thick layer or on the vertical surface thereof as well as previous thixotropy-imparting agent such as a montmorillonite derivative, a polymerized oil, hydrogenated castor oil, a polyethylene emersion wax, a polyester polymer, a polyamide polymer and a diamide compound, which are not applied with the present invention. Therefore, the thixotropy-imparting agent cannot prevent liquid dripping completely on the surface to be applied, especially on the vertical surface.

The polymer (C) having the polar functional group is selected from the group consisting of oxidated poly olefine, polyol, poly ether, poly-carboxylic acid, polyamine, polyester, polyphosphoric acid, and polysulfonic acid.

The polymer (C) having the polar functional group may be a homopolymer or copolymer. Polymerizable comonomers for the copolymer are not restricted by amounts or kinds thereof, unless the objective properties of the thixotropy-imparting agent are not impaired.

For example, the polymer (C) having the polar functional group may be various polymers which are addition-polymerized polymers obtained from various monomers such as (meth)acrylate derivatives, acryl amides, aromatic hydrocarbon compounds having a vinyl group or vinyl ester and so on, or may various condensation polymers such as polyester, polystyrene, polyurethane, acrylic polymer, polyethylene, polypropylene, ethylene-vinyl acetate copolymer, ethylene-acrylic copolymer, styrene-acrylic copolymer, maleic anhydride-modified product and so on. The polymer (C) having the polar functional group may partially include any one of those modified polymers. The modified products are exemplified with products modified by alcohol or amine.

The polar functional group is a hydroxyl group, a carboxyl group or an amino group, or a substituent having any ones of them.

Weight average molecular weight of the polymer(C) having the polar functional group is 1,000-100,000 based on polystyrene conversion.

If the weight average molecular weight of the polymer (C) having the polar functional group is less than 1,000, the sufficient thixotropy properties may not be expressed when the paint composition including no non-alcoholic solvent or no alcoholic solvent on the surface to be applied so as to become the thick layer or on the vertical surface thereof as well as previous thixotropy-imparting agent such as a montmorillonite derivative, a polymerized oil, hydrogenated castor oil, a polyethylene emersion wax, a polyester polymer, a polyamide polymer and a diamide compound, which are not applied with the present invention. Therefore, the thixotropy-imparting agent cannot prevent liquid dripping completely on the surface to be applied, especially on the vertical surface. If the weight average molecular weight thereof is over 200,000, patterns of cohesion are expressed on a partial dripping surface due to aggregation properties of the thixotropy-imparting agent after the thixotropy-imparting agent as a mixture, which is obtained by mixing the amide compound (A), the non-amide wax component (B) and the polymer (C) having the polar functional group, is added into the paint or ink to express the liquid dripping prevention properties on the surface to be applied, especially the vertical surface thereof. Thereby, the appearance of the coating layer is deteriorated.

The mixture obtained by mixing the amide compound (A) obtained through a condensation reaction of the primary diamine having 2-8 carbon atoms and hydrogenated castor oil fatty acid or additional aliphatic monocarboxylic acid, the non-amide wax component (B) and the polymer (C) having the polar functional group, is prepared through including 1-95 % by mass of the amide compound (A), 1-95 % by mass of the non-amide wax component (B) and 0.1-10 % by mass of the polymer (C) having the polar functional group. The mixture by mixing the amide compound (A), the non-amide wax component (B) and the polymer (C) having the polar functional group, has an acid value of 30 or less, preferably 5-20, and an amine value of 20 or less, preferably 7 or less.

If the amide compound (A) is less than 1 % by mass, the sufficient thixotropy property may not be expressed when the paint composition including no solvent or no alcoholic solvent is applied on the surface to be applied so as to become thick layer or on a vertical surface thereof as well as the previous thixotropy-imparting agent such as a montmorillonite derivative, a polymerized oil, hydrogenated castor oil, a polyethylene emersion wax, a polyester polymer, a polyamide polymer and a diamide compound, which are not applied with the present invention. Therefore, the thixotropy-imparting agent cannot prevent liquid dripping completely on the surface to be applied, especially the vertical surface. If the quantity of the amide compound (A) is over 95 % by mass, patterns of cohesion are expressed on a partial dripping surface due to aggregation properties of the thixotropy-imparting agent after the thixotropy-imparting agent as a mixture, which is obtained by mixing the amide compound (A), the non-amide wax component (B) and the polymer (C) having the polar functional group, is added into the paint or the ink to express the liquid dripping prevention properties on the surface to be applied, especially the vertical surface thereof. Thereby, the appearance of the coating layer is deteriorated.

If the quantity of the non-amide wax component (B) is less than 1 % by mass or over 95 % by mass, the sufficient thixotropy properties may not be expressed when the paint composition including no solvent or no alcoholic solvent is applied on the surface to be applied so as to become thick layer or on the vertical surface thereof as well as previous thixotropy-imparting agent such as a montmorillonite derivative, a polymerized oil, hydrogenated castor oil, a polyethylene emersion wax, a polyester polymer, a polyamide polymer and a diamide compound, which are not applied with the present invention. Therefore, the thixotropy-imparting agent cannot prevent liquid dripping completely on the surface to be applied, especially on the vertical surface.

If the quantity of the polymer (C) having the polar functional group is less than 0.1 % by mass, the sufficient thixotropy properties may not be expressed when the paint composition including no solvent or no alcoholic solvent on the surface to be applied so as to become thick layer or on the vertical surface thereof as well as previous thixotropy-imparting agent such as a montmorillonite derivative, a polymerized oil, hydrogenated castor oil, a polyethylene emersion wax, a polyester polymer, polyamide polymer and a diamide compound, which are not applied with the present invention. Therefore, the thixotropy-imparting agent cannot prevent liquid dripping completely on the surface to be applied, especially on the vertical surface. If the quantity of the polymer (C) having the polar functional group is over 10 % by mass, patterns of cohesion are expressed on a partial dripping surface due to aggregation properties of the thixotropy-imparting agent after the thixotropy-imparting agent as a mixture, which is obtained by mixing the amide compound (A), the non-amide wax component (B) and the polymer (C) having the polar functional group, is added into the paint or the ink to express the liquid dripping prevention properties on the surface to be applied, especially the vertical surface thereof. Thereby, the appearance of the coating layer is deteriorated.

The powdery thixotropy-imparting agent for the non-aqueous paint contains the powder consisting of a fusion-mixed product, which is prepared by mixing and then heating and melting the amide compound (A), in which a primary diamine having 2-8 carbon atoms, and a hydrogenated castor oil fatty acid or additional aliphatic monocarboxylic acid are condensed, the non-amide wax component (B) as defined in the invention and the polymer (C) having the polar functional group, as defined in the invention.

It is preferable that the powder consisting of the fusion-mixed product is fine pulverized particles, which is obtained by mixing and melting them and pulverizing thereof into the particles having the particle size of 30 pin or less, preferably 10 µm or less, further preferably 4-7 µm after cooling thereof. The fine pulverized particles can be dispersed into the non-aqueous paint by using a mechanical dispersing apparatus such as a disperser, or a wet dispersing apparatus with technique by using medias such as glass beads. And 1-10 % by mass, preferably 1-5 % by mass of the fine pulverized particles is blended into the paint based on total blend amount thereof, when they are dispersed into the non-aqueous paint.

The non-aqueous paint is a paint using a non-aqueous dispersible resin as an ingredient of the non-aqueous paint. The resin for usage is not restricted. The various resin such as an acrylic resin, an acrylic urethane resin, an acrylic silicone resin, a fluorocarbon resin, an alkyd resin, an epoxy resin and a mixture of them, may be used.

The non-aqueous paint includes the powdery thixotropy-imparting agent for the non-aqueous paint, the non-aqueous dispersible resin, and if necessary non-aqueous paint ingredients such as pigment, dyestuff, and colorant, and may include further non-alcoholic organic solvents such as xylene and methyl isobutyl ketone (MIBK), or other solvents such as organic solvents illustrated by polyethylene glycol, normal butanol and benzyl alcohol, may include a reactive diluent, or may include no solvents or no reactive diluents.

### Embodiments

Hereunder, Reference Examples will be presented in order to understand the present invention and Comparative Examples which do not apply the present invention, and tests for them.

Examples of preparing mixtures, which are obtained by mixing an amide compound (A), a non-amide wax component (B) and a polymer (C) having a polar functional group, are given as preparation reference examples 1-4. Comparative examples of preparing mixtures, which are obtained by mixing an amide compound (A), a non-amide wax component (B) and a polymer (C) having a polar functional group, are given as comparative preparation examples 1-6 in which the present invention are not applied.

### (Reference Mixing-Example 1)

### (I-1) Condensation reaction of amide compound (A)

489.1 parts by mass of 12-hydroxystearic acid (a product, which was available form Itoh Oil Chemicals Co, Ltd.) as the aliphatic monocarboxylic acid was put in a 1000 mL vessel installed with a starrer, a thermometer, a water trap, and a bubbling port for nitrogen, and then heated up to 80-100 °C to be melted. After that, 110.9 parts of meta-xylene diamine (brevity code: MXDA, a product which was available form MITSUBISHI GAS CHEMICAL COMPANY, INC.) as the primary diamine was added thereto. An amidation reaction was carried out at 170 °C under nitrogen atmosphere for 2-5 hours with dehydration. Thereby, an amide compound as a pale yellow solid having 5 of an acid value and 3 of an amine value and c.a. 130 °C of a melting point was obtained.

### (I-2) Mixing of amide compound (A), non-amide wax component (B) and polymer (C) having polar functional group

75.0 parts by mass of hydrogenated castor oil as the non-amide wax component (B) (tradename: CASTER WAX, a product which was available from NOF Corporation) having 2 or less of an acid value and 85 °C of a melting point, and 10.0 parts by mass of the polymer (C) having the polar functional group as oxidated polyolefin (tradename: Hi-Wax 4052E, a product which was available from Mitsui Chemical Inc.) having 20 of an acid value and 3,000 of weight average molecular weight, were added into 15 parts by mass of the amide compound (A). They were mixed and melted at 160 °C for 1-2 hours under nitrogen atmosphere to obtain a pale yellow mixture (having 5 of an acid value and 2 of an amine value) of the amide compound (A), the non-amide wax component (B) and the polymer (C) having the polar functional group. The obtained mixture was pulverized to obtain a fine-powdered pulverizing-mixture having 7 µm of an average particle size.

### (Reference Mixing-Example II)

### (II-1) Condensation reaction of amide compound (A)

521.7 parts by mass of lauric acid (tradename: LUNAC L-70, a product which was available from Kao Corporation) as the aliphatic monocarboxylic acid was put in a 1000 mL vessel installed with a starrer, a thermometer, a water trap, and a bubbling port for nitrogen, and then heated up to 80-100 °C to be melted. After that, 78.3 parts of ethylene diamine (brevity code: EDA, a product is available form Tosoh Corporation) as the primary diamine was added thereto. An amidation reaction was carried out at 170 °C under nitrogen atmosphere for 2-5 hours with dehydration. Thereby, an amide compound as a pale yellow solid having 7 of an acid value and 5 of an amine value and c.a. 150 °C of a melting point was obtained.

### (II-2) Synthetic reaction for styrene-acryl copolymer

90 parts by mass of propylene glycol monomethyl ether acetate was put in a 500 mL vessel installed with a starrer, a reflux condenser tube, a dropping funnel, a thermometer, and a bubbling port for nitrogen, and then heated up to 100 °C to under nitrogen atmosphere. A solution prepared by mixing and solving of 10 parts by mass of propylene glycol monomethyl ether acetate, 50 parts by mass of styrene (a product which was available form Sankyo Chemical Co. Ltd.), 50 parts by mass of acrylic acid (a product which was available form Toagosei Co. Ltd.) as an acrylic monomer, and 5 parts by mass of tert-butyl peroxy-2- ethyl hexanoate (tradename: Perbutyl O, a product which was available form NOF Corporation) as a polymerization initiator were added by using the dropping funnel dropwise for 2 hours at a constant speed to prepare a monomer solution, while the temperature of the propylene glycol monomethyl ether acetate was kept at 100 °C After the finishing of dropping, the monomer solution was heated up to 110 °C, it was reacted for 2 hours to prepare a solution of a styrene-acryl copolymer. The solvent ingredients were removed under reduced pressure from the obtained solution of the styrene-acryl copolymer to prepare a polymer ingredient (C) of the styrene-acryl copolymer. After that, the styrene-acryl copolymer was eluted according to molecular weight by using a gel permeation chromatography (column: TSKgelSuperMutiporeHZ-M, which was available form Tosoh Corporation, an eluting solvent: THF) which enables to separate molecules having different molecular weight, in order to determine molecular weight distribution. A calibration curve was prepared by using a standard substance of polystyrene of which molecular weight was determined beforehand. After comparing it with the molecular weight distribution of the styrene-acryl copolymer, weight average molecular weight of the copolymer was determined. As a result thereof, the weight average molecular weight of the copolymer was 15,000 by the polystyrene conversion. And an acid value thereof was 15.

### (II-3) Mixing amide compound (A) with non-amide wax component (B) and polymer (C) having polar functional group

45 part by mass of polyethylene wax having 0 of an acid value and 120 °C of a melting point (tradename: Hi-WAX 100P, a product which was available form Mitsui Chemicals, Inc.) as the non-amide wax component (B) was added to 50 parts by mass of the amide compound (A). And then, 5.0 parts by mass of the styrene-acryl copolymer having 15 of an acid value and 15,000 of the weight average molecular weight as the polymer (C) having the polar functional group prepared in (II-2) was added thereto. The blend was melted under nitrogen atmosphere at 160 °C for 1-2 hours to obtain a pale yellow mixture having 6 of an acid value and 2 of an amine value of the amide compound (A), the non-amide wax component (B) and the polymer (C) having the polar functional group. The obtained mixture was pulverized to obtained fine particles mixture having 10 µm of an average particle size.

### (Reference Mixing-Example III)

### (III-1) Condensation reaction of amide compound (A)

479.6 parts by mass of oleic acid (tradename; D-100, a product which was available form New Japan Chemical Co.,Ltd.) as the aliphatic monocarboxylic acid was put in a 1000 mL vessel installed with a starrer, a thermometer, a water trap, and a bubbling port for nitrogen, and then heated up to 80-100 °C to be melted. After that, 102.4 parts of hexamethylene diamine (brevity code: HMDA, a product which was available form Toray Industries, Inc.) as the primary diamine was added thereto. An amidation reaction was carried out at 170 °C under nitrogen atmosphere for 2-5 hours with dehydration. Thereby, an amide compound as a pale yellow solid having 6 of an acid value and 6 of an amine value and c.a. 120 °C of a melting point was obtained.

### (III-2) Synthetic reaction for acryl polymer

90 parts by mass of propylene glycol monomethyl ether acetate was put in a 500 mL vessel installed with a starrer, a reflux condenser tube, a dropping funnel, a thermometer, and a bubbling port for nitrogen, and then heated up to 100 °C to under nitrogen atmosphere. A solution prepared by mixing and solving 10 parts by mass of propylene glycol monomethyl ether acetate, 100 parts by mass of acrylic acid (a product which was available form Toagosei Co. Ltd.) as an acrylic monomer, and 2 parts by mass of tert-butyl peroxy-2- ethyl hexanoate (tradename: Perbutyl O, a product which was available form NOF Corporation) as a polymerization initiator were added by using the dropping funnel dropwise for 2 hours at a constant speed to prepare a monomer solution, while the temperature of the propylene glycol monomethyl ether acetate was kept at 100 °C. After the finishing of dropping, the monomer solution was heated up to 110 °C, it was reacted for 2 hours to prepare a solution of an acryl polymer. The solvent ingredients were removed under reduced pressure from the obtained solution of the acryl polymer to prepare the acryl copolymer as a polymer ingredient(C). After that, the copolymers in the acryl polymer were eluted according to molecular weight by using a gel permeation chromatography (column: TSKgelSuperMutiporeHZ-M, which was available form Tosoh Corporation, an eluting solvent: THF) which enabled to separate molecules having different molecular weight, in order to determine molecular weight distribution. A calibration curve was prepared by using a standard substance of polystyrene of which molecular weight was determined beforehand. After comparing it with the molecular weight distribution of the acryl polymer, weight average molecular weight of the copolymer was determined. As a result thereof, the weight average molecular weight of copolymer in the acryl polymer was 75,000 by the polystyrene conversion. And an acid value thereof was 40.

### (III-3) Mixing amide compound (A) with non-amide wax component (B) and polymer (C) having polar functional group

9.0 part by mass of hydrogenated caster oil (tradename: CASTER WAX, a product which was available form NOF CORPORATION) having 2 or less of an acid value and 85 °C of a melting point as the non-amide wax component (B) was added to 90.0 parts by mass of the amide compound (A). And then, 1.0 parts by mass of the acryl polymer having 40 of an acid value and 75,000 of weight average molecular weight as the polymer (C) having the polar functional group prepared in (III-2) was added thereto. The blend was melted under nitrogen atmosphere at 160 °C for 1-2 hours to obtain a pale yellow mixture having 15 of an acid value and 4 of an amine value of the amide compound (A), the non-amide wax component (B) and the polymer (C) having the polar functional group. The obtained mixture was pulverized to obtained fine particles mixture having 6 µm of an average particle size.

### (Reference Mixing-Example IV)

### (IV-1) Mixing amide compound (A) with non-amide wax component (B) and polymer (C) having polar functional group

61.5 part by mass of the microcrystalline wax having 0 of an acid value and 98 °C of a melting point (tradename:Hi-Mic-2095, a product which was available form NIPPON SEIRO CO., LTD.) as the non-amide wax component (B) was added to 35.0 parts by mass of the amide compound (A) prepared in (Mixing-Example 11-1). And then, 3.5 parts by mass of the polyol having 15 of an acid value and 40,000 of the weight average molecular weight (tradename: PC#5984, a product which was available form Toei-Kasei Corporation) as the polymer (C) having the polar functional group was added thereto. The blend was melted under nitrogen atmosphere at 160 °C for 1-2 hours to obtain a pale yellow mixture having 7 of an acid value and 7 of an amine value of the amide compound (A), the non-amide wax component (B) and the polymer (C) having the polar functional group. The obtained mixture was pulverized to obtained fine particles mixture having 7 µm of an average particle size.

### (Comparative Mixing-Example i)

### (i-1) Condensation reaction of amide compound (A)

517.1 parts by mass of montanic acid (tradename: Licowax S, a product which was available from Clariant Chemicals Ltd.) as the aliphatic monocarboxylic acid was put in a 1000 mL vessel installed with a starrer, a thermometer, a water trap, and a bubbling port for nitrogen, and then heated up to 80-100 °C to be melted. After that, 82.9 parts of meta-xylene diamine (brevity code: MXDA, a product which was available form MITSUBISHI GAS CHEMICAL COMPANY, INC.) as the primary diamine was added thereto. An amidation reaction was carried out at 170 °C under nitrogen atmosphere for 2-5 hours with dehydration. Thereby, an amide compound as a pale yellow solid having 7 of an acid value and 4 of an amine value and c.a. 140 °C of a melting point was obtained.

### (i-2) Mixing amide compound (A) with non-amide wax component (B) and polymer (C) having polar functional group

75.0 part by mass of hydrogenated caster oil (tradename: CASTER WAX, a product which was available form NOF CORPORATION) having 2 or less of an acid value and 85 °C of a melting point as the non-amide wax component (B) was added to 15 parts by mass of the amide compound (A). And then, 10 parts by mass of the polymer (C) having the polar functional group as oxidated polyolefin (tradename: Hi-Wax 4052E, a product which was available from Mitsui Chemical Inc.) having 20 of an acid value and 3,000 of weight average molecular weight, was added thereto. The blend was melted under nitrogen atmosphere at 160 °C for 1-2 hours to obtain a pale yellow mixture having 6 of an acid value and 3 of an amine value of the amide compound (A), the non-amide wax component (B) and the polymer (C) having the polar functional group. The obtained mixture was pulverized to obtained fine-powdered pulverizing-mixture having 14 µm of an average particle size.

### (Comparative Mixing-Example ii)

### (ii-1) Condensation reaction of amide compound (A)

489.1 parts by mass of 12-hydroxystearic acid (a product a product which was available form Itoh Oil Chemicals Co, Ltd.) as the aliphatic monocarboxylic acid was put in a 1000 mL vessel installed with a starrer, a thermometer, a water trap, and a bubbling port for nitrogen, and then heated up to 80-100 °C to be melted. After that, 110.9 parts of meta-xylene diamine (brevity code: MXDA, product which was available form MITSUBISHI GAS CHEMICAL COMPANY, INC.) as the primary diamine was added thereto. An amidation reaction was carried out at 170 °C under nitrogen atmosphere for 2-5 hours with dehydration. Thereby, an amide compound as a pale yellow solid having 5 of an acid value and 3 of an amine value and c.a. 130 °C of a melting point was obtained.

### (ii-2) Mixing amide compound (A) with non-amide wax component (B) and polymer (C) having polar functional group

75.0 part by mass of paraffin wax having 1 or less of an acid value and 59 °C of a melting point (tradename: paraffin wax ax-135, a product which was available form NIPPON SEIRO CO., LTD.) as the non-amide wax component (B) was added to 15 parts by mass of the amide compound (A). And then, 10.0 parts by mass of oxidated polyolefin (tradename: Hi-Wax 4052E, a product which was available from Mitsui Chemical Inc.) having 20 of an acid value and 3,000 of weight average molecular weight as the polymer (C) having the polar functional group was added thereto. The blend was melted under nitrogen atmosphere at 160 °C for 1-2 hours to obtain a pale yellow mixture having 5 of an acid value and 2 of an amine value of the amide compound (A), the non-amide wax component (B) and the polymer (C) having the polar functional group. The obtained mixture was pulverized to obtained fine-powdered pulverizing-mixture having 12 µm of an average particle size.

### (Comparative Mixing-Example iii)

### (iii-1) Condensation reaction of amide compound (A)

497.6 parts by mass of oleic acid (tradename; D-100, a product which was available form New Japan Chemical Co.,Ltd.) as the aliphatic monocarboxylic acid was put in a 1000 mL vessel installed with a starrer, a thermometer, a water trap, and a bubbling port for nitrogen, and then heated up to 80-100 °C to be melted. After that, 102.4 parts of hexamethylene diamine (brevity code: HMDA, a product which was available form Toray Industries, Inc. ) as the primary diamine was added thereto. An amidation reaction was carried out at 170 °C under nitrogen atmosphere for 2-5 hours with dehydration. Thereby, an amide compound as a pale yellow solid having 6 of an acid value and 6 of an amine value and c.a. 120 °C of a melting point was obtained.

### (iii-2) Synthesis for acryl polymer

90 parts by mass of propylene glycol monomethyl ether acetate was put in a 500 mL vessel installed with a starrer, a reflux condenser tube, a dropping funnel, a thermometer, and a bubbling port for nitrogen, and then heated up to 90 °C to under nitrogen atmosphere. A solution prepared by mixing of 10 parts by mass of propylene glycol monomethyl ether acetate, 100 parts by mass of acrylic acid (a product which was available form Toagosei Co. Ltd.) as an acrylic monomer, and 0.2 parts by mass of tert-butyl peroxy-2- ethyl hexanoate (tradename: Perbutyl O, a product which was available form NOF Corporation) as a polymerization initiator was added by using the dropping funnel dropwise for 2 hours at a constant speed to prepare a monomer solution, while the temperature of the propylene glycol monomethyl ether acetate was kept at 90 °C. After the finishing of dropping, the monomer solution was heated up to 100 °C, it was reacted for 2 hours to prepare a solution of an acryl polymer. The solvent ingredients were removed under reduced pressure from the obtained solution of the acryl polymer to prepare the acryl copolymer as the polymer ingredient (C). After that, the copolymers in the acryl polymer were eluted according to molecular weight by using a gel permeation chromatography (column: TSKgel SuperMutipore HZ-M, which was available form Tosoh Corporation, an eluting solvent: THF) which enables to separate molecules having different molecular weight, in order to determine molecular weight distribution. A calibration curve was prepared by using a standard substance of polystyrene of which molecular weight was determined beforehand. After comparing it with the molecular weight distribution of the copolymer in the acryl polymer, weight average molecular weight of the copolymer was determined. As a result thereof, the weight average molecular weight of copolymer in the acryl polymer was 150,000 by the polystyrene conversion. And an acid value thereof was 40.

### (iii-3)Mixing amide compound (A) with non-amide wax component (B) and polymer (C) having polar functional group

9.0 part by mass of hydrogenated caster oil (tradename: CASTER WAX, a product which was available form NOF CORPORATION) having 2 or less of an acid value and 85 °C of a melting point as the non-amide wax component (B) was added to 90.0 parts by mass of the amide compound (A). And then, 1.0 parts by mass of the acryl polymer (which was prepared by Kyoeisha Chemical Co., LTD.) having 40 of an acid value and 150,000 of the weight average molecular weight as the polymer (C) having the polar functional group was added thereto. The blend was melted under nitrogen atmosphere at 160°C for 1-2 hours to obtain a pale yellow mixture having 15 of an acid value and 5 of an amine value of the amide compound (A), the non-amide wax component (B) and the polymer (C) having the polar functional group. The obtained mixture was pulverized to obtained fine-powdered pulverizing-mixture having 8 µm of an average particle size.

### (Comparative Mixing-Example iv)

### (iv-1) Condensation reaction of amide compound (A)

521.7 parts by mass of lauric acid (tradename: LUNAC L-70, a product which was available from Kao Corporation) as the aliphatic monocarboxylic acid was put in a 1000 mL vessel installed with a starrer, a thermometer, a water trap, and a bubbling port for nitrogen, and then heated up to 80-100 °C to be melted. After that, 78.3 parts of ethylene diamine (brevity code: EDA, product manufactured by Tosoh Corporation) as the primary diamine was added thereto. An amidation reaction was carried out at 170 °C under nitrogen atmosphere for 2-5 hours with dehydration. Thereby, an amide compound as a pale yellow solid having 7 of an acid value and 5 of an amine value and c.a. 150 °C of a melting point was obtained.

### (iv-2)Mixing amide compound (A) with non-amide wax component (B) and polymer (C) having polar functional group

1.0 part by mass of polyethylene wax having 0 of an acid value and 120 °C of a melting point (tradename: Hi-WAX 100P, a product which was available form Mitsui Chemicals, Inc.) as the non-amide wax component (B) was added to 97.0 parts by mass of the amide compound (A). And then, 2 parts by mass of the styrene-acryl copolymer having 15 of an acid value and 15,000 of the weight average molecular weight as the polymer (C) having the polar functional group prepared in (II-2) of above-mentioned Mixing-Example II was added thereto. The blend was melted under nitrogen atmosphere at 160 °C for 1-2 hours to obtain a pale yellow mixture having 5 of an acid value and 2 of an amine value of the amide compound (A), the non-amide wax component (B) and the polymer (C) having the polar functional group. The obtained mixture was pulverized to obtained fine-powdered pulverizing-mixture having 7 µm of an average particle size.

### (Comparative Mixing-Example v)

### (v-1) Condensation reaction of amide compound (A)

521.7 parts by mass of lauric acid (tradename: LUNAC L-70, a product which was available from Kao Corporation) as the aliphatic monocarboxylic acid was put in a 1000 mL vessel installed with a starrer, a thermometer, a water trap, and a bubbling port for nitrogen, and then heated up to 80-100 °C to be melted. After that, 78.3 parts of ethylene diamine (brevity code: EDA, a product which was available form Tosoh Corporation) as the primary diamine was added thereto. An amidation reaction was carried out at 170 °C under nitrogen atmosphere for 2-5 hours with dehydration. Thereby, an amide compound as a pale yellow solid having 7 of an acid value and 5 of an amine value and c.a. 150 °C of a melting point was obtained.

### (v-2)Mixing amide compound (A) with non-amide wax component (B) and polymer (C) having polar functional group

40.0 part by mass of polyethylene wax having 0 of an acid value and 120 °C of a melting point (tradename: Hi-WAX 100P, a product which was available form Mitsui Chemicals, Inc.) as the non-amide wax component (B) was added to 40.0 parts by mass of the amide compound (A). And then, 20.0 parts by mass of the styrene-acryl copolymer having 15 of an acid value and 15,000 of the weight average molecular weight as the polymer (C) having the polar functional group prepared in (II-2) of above-mentioned Reference Mixing-Example II was added thereto. The blend was melted under nitrogen atmosphere at 160 °C for 1-2 hours to obtain a pale yellow mixture having 5 of an acid value and 3 of an amine value of the amide compound (A), the non-amide wax component (B) and the polymer (C) having the polar functional group. The obtained mixture was pulverized to obtained fine-powdered pulverizing-mixture having 5 µm of an average particle size.

### (Comparative Mixing-Example vi)

### (vi-1) Condensation reaction of amide compound (A)

521.7 parts by mass of lauric acid (tradename: LUNAC L-70, a product which was available form Kao Corporation) as the aliphatic monocarboxylic acid was put in a 1000 mL vessel installed with a starrer, a thermometer, a water trap, and a bubbling port for nitrogen, and then heated up to 80-100 °C to be melted. After that, 78.3 parts of ethylene diamine (brevity code: EDA, a product which was available form Tosoh Corporation) as the primary diamine was added thereto. An amidation reaction was carried out at 170 °C under nitrogen atmosphere for 2-5 hours with dehydration. Thereby, an amide compound as a pale yellow solid having 7 of an acid value and 5 of an amine value and c.a. 150 °C of a melting point was obtained.

### (vi-2)Mixing amide compound (A) with non-amide wax component (B) and polymer (C) having polar functional group

97.0 part by mass of polyethylene wax having 0 of an acid value and 120 °C of a melting point (tradename: Hi-WAX 100P, a product which was available form Mitsui Chemicals, Inc.) as the non-amide wax component (B) was added to 1.0 parts by mass of the amide compound (A). And then, 2.0 parts by mass of the styrene-acryl copolymer having 15 of an acid value and 15,000 of the weight average molecular weight as the polymer (C) having the polar functional group prepared in (II-2) of above-mentioned Mixing-Example II was added thereto. The blend was melted under nitrogen atmosphere at 160 °C for 1-2 hours to obtain a pale yellow mixture having 3 of an acid value and 2 of an amine value of the amide compound (A), the non-amide wax component (B) and the polymer (C) having the polar functional group. The obtained mixture was pulverized to obtained fine-powdered pulverizing-mixture having 15 µm of an average particle size.

### (Examples of performance evaluation test for powdery thixotropy-imparting agent for non-aqueous paint)

### (Reference Example

### 1: Preparation of paint sample A for evaluation and blank paint sample a)

134.7 parts by mass of jER828 (tradename, which was available from Mitsubishi Chemical Corporation) as an epoxy resin, 72.8 parts by mass of Whiton P30 (a product name, which was available from Shiraishi Calcium Kaisya, Ltd.) as calcium carbonate, and 12.5 parts by mass of TIPAQUE CR-95 (tradename, which was available from ISHIHARA SANGYO KAISHA, LTD.) as titanium oxide, and 25.0 parts by mass of MS-KY (tradename, which was available from NIPPON TALC CO., LTD.) were measured and taken out sequentially. And then, 5.0 parts by mass of the powdery thixotropy-imparting agents prepared in Reference Mixing-Examples 1-3 and Comparative

Mixing-Examples 1-6 were added thereto, respectively. They were dispersed for 10 minutes at 3000 rpm. by using an agitator to obtain a dispersed solution. And they were dispersed on a water bath of 63 °C for 30 minutes at 3000 rpm by using the agitator to obtain a paint sample: A. Incidentally, a paint without using the powdery thixotropy-imparting agents was used as blanc paint sample: a.

### (Measurement of viscosity of paint sample: A for evaluation and blanc paint sample: a)

21.0 parts by mass of ST12 (a product name, which was available from Mitsubishi Chemical Corporation) as an amine resin was added to 79.0 parts by mass of each of paint samples A and a, and they were mixed by using a spatula for 2 minutes by hand. After each of paint samples were kept at 25 °C, their viscosities (mPa·s) of 6 rpm and 60 rpm were measured by a B-type viscometer. The viscosity of 6 rpm was divided by the viscosity of 60 rpm, and thereby, TI values (i.e. Thixotropic Index) were calculated. The TI value is an index which shows that the higher the TI value is indicated, the more excellent the sample has thixotropy properties. The results thereof are shown in Table 1.

### (Measurement of viscosity after diluting solutions of paint samples: A for evaluation and blanc paint samples: a with solvent)

Each of the paint samples: A and a were mixed with the amine resin to prepare the mixed paint samples, and thinner (xylene/MIBK/n-butanol with ratio by mass: 4/4/2) as a diluent solvent was added thereto. They were mixed by using a spatula for 2 minutes by hand. After each of the diluted paint samples were kept at 25 °C, the amounts of the thinner were added so as to be adjusted to 2000 mPa·s of viscosity of 60 rpm by a B-type viscometer. The viscosities (mPa s) of 6 rpm and 60 rpm after adjusting the viscosity of 60 rpm were determined. The results thereof are shown in Table 1.

### (Estimate of limit of layer-thickness for liquid dripping prevention properties of the solvent-diluted paint sample: A and blank paint sample; a)

Each of solvent-diluted paint samples: A and a were coated onto glass plates, and the coated plates were immediately stood perpendicularly. After drying them at room temperature for 1 day, the states of coating thereof were observed visually. And the layer-thickness of the coating layer was measured and estimated as limit thickness by using a sag-tester just before occurring the liquid dipping. The results thereof are shown in Table 1.

### (Preparation of paint sample B for evaluation and blank paint sample b)

134.7 parts by mass of jER828 (tradename, which was available from Mitsubishi Chemical Corporation) as an epoxy resin, 12.5 parts by mass of TIPAQUE CR-95 (a product name, which was available from ISHIHARA SANGYO KAISHA, LTD.) as titanium oxide, and 97.3 parts by mass of barium sulfate were measured and taken out sequentially. And then, 5.0 parts by mass of the powdery thixotropy-imparting agents prepared in Reference

Mixing-Examples 1-3 and Comparative Mixing-Examples 1-6 were added thereto, respectively. They were dispersed for 10 minutes at 3000 rpm. by using an agitator to obtain a dispersed solution. And they were dispersed on a water bath of 63 °C for 30 minutes at 3000 rpm by using an agitator to obtain a paint sample: B. Incidentally, a paint without using the powdery thixotropy-imparting agents was used as blanc paint sample b.

### (Measurement of viscosity of paint sample: B for evaluation and blanc paint sample: b)

79.0 parts by mass of each of the paint samples: B and b were mixed with 21.0 parts by mass of ST12 (tradename, which was available from Mitsubishi Chemical Corporation) as an amine resin to prepare the mixed paint samples. They were mixed by using a spatula for 2 minutes by hand. After each of the paint samples were kept at 25 °C, the viscosity (mPa·s) of 6 rpm and 60 rpm by a B-type viscometer. The viscosity of 6 rpm was divided by the viscosity of 60 rpm, and thereby, TI values (i.e. Thixotropic Index) were calculated. The TI value is an index which shows that the higher the TI value is indicated, the more excellent the sample has thixotropy properties. The results thereof are shown in Table 2.

### (Measurement of viscosity after diluting solutions of paint samples: B for evaluation and blanc paint samples: b)

Each of the paint samples: B and b were mixed with the amine resin to prepare the mixed paint samples, and 6 parts by mass of thinner (xylene/n-butanol with ratio by mass: 8/2) was added thereto. They were mixed by using a spatula for 2 minutes by hand. After each of the diluted paint samples with the solvent were kept at 25 °C, the viscosity (mPa·s) of 6 rpm and 60 rpm by a B-type viscometer. The results thereof are shown in Table 2.

### (Estimate of limit of layer-thickness for liquid dripping prevention properties of the paint sample: B for estimate and blank paint sample; b)

Each of solvent-diluted paint samples: B and b were coated onto glass plates, and the coated plates were immediately stood perpendicularly. After drying them at room temperature for 1 day, the states of coating thereof were observed visually. And the layer-thickness of the coating layer was measured and estimated as limit thickness by using a sag-tester just before occurring the liquid dipping. The results thereof are shown in Table 2.

**[Table 1]**

| Table 1 Results for Evaluation of Paint Sample A: for Evaluation and Blank Paint Sample: a | | | | | | | |
|---|---|---|---|---|---|---|---|
| Paint Sample | Before Diluting by Solvent | | | After Diluting by Solvent | | | |
| | Viscosity of 6 rpm (mPa·s) | Viscosity of 60 rpm (mPa·s) | TI Value | Viscosity of 6 rpm (mPa·s) | Viscosity of 60 rpm (mPa·s) | TI Value | Limit of Layer-Thickness for Dripping Prevention (µm) |
| Blank | 2500 | 2500 | 1.0 | 2000 | 2000 | 1.0 | <100 |
| Reference Mixing-Example 1 | >100000 | >100000 | * | 12000 | 2000 | 6.0 | 800 |
| Reference Mixing-Example 2 | >100000 | >100000 | * | 14000 | 2000 | 7.0 | 800 |
| Reference Mixing-Example 3 | >100000 | >100000 | * | 13000 | 2000 | 6.5 | 800 |
| Reference Mixing-Example 4 | > 100000 | >100000 | -* | 12000 | 2000 | 6.0 | 800 |
| Comparative Mixing-Example 1 | 55000 | >100000 | -* | 8000 | 2000 | 4.0 | 400 |
| Comparative Mixing-Example 2 | 19000 | 9000 | 2.1 | 5000 | 2000 | 2.5 | 300 |
| Comparative Mixing-Example 3 | 18000 | 9000 | 2.0 | 5000 | 2000 | 2.5 | <100 |
| Comparative Mixing-Example 4 | 30000 | >100000 | * | 6000 | 2000 | 3.0 | 350 |
| Comparative Mixing-Example 5 | 12000 | 5000 | 2.4 | 4000 | 2000 | 2.0 | 200 |
| Comparative Mixing-Example 6 | 10000 | 6000 | 1.7 | 4000 | 2000 | 2.0 | <100 |

| | | | | | | | |
|---|---|---|---|---|---|---|---|
| *: Viscosity of 6 rpm. and/or 60 rpm. could not be determined. Therefore, TI Values could not be calculated. | | | | | | | |

**[Table 2]**

| Table 2 Results for Evaluation of Paint Sample B: for Evaluation and Blank Paint Sample: b | | | | | | | |
|---|---|---|---|---|---|---|---|
| Paint Sample | Before Diluting by Solvent | | | After Diluting by Solvent | | | |
| | Viscosity of 6 rpm. (mPa·s) | Viscosity of 60 rpm (mPa·s) | TI Value | Viscosity of 6 rpm (mPa·s) | Viscosity of 60 rpm (mPa·s) | TI Value | Limit of Layer-Thickness for Dripping Prevention (µm) |
| Blank | 10000 | >100000 | * | 1400 | 2000 | 0.7 | <100 |
| Reference Mixing-Example 1 | 70000 | >100000 | * | 23000 | 6400 | 3.6 | 1300 |
| Reference Mixing-Example 2 | 70000 | >100000 | * | 22000 | 6100 | 3.6 | 1300 |
| Reference Mixing-Example 3 | 70000 | >100000 | * | 23000 | 6500 | 3.5 | 1300 |
| Reference Mixing-Example 4 | 70000 | >100000 | * | 21000 | 6000 | 3.5 | 1300 |
| Comparative Mixing-Example 1 | 32000 | >100000 | -* | 9000 | 4000 | 2.3 | 500 |
| Comparative Mixing-Example 2 | 20000 | >100000 | -* | 5000 | 2500 | 2.0 | 300 |
| Comparative Mixing-Example 3 | 19000 | >100000 | * | 5000 | 2300 | 2.2 | 400 |
| Comparative Mixing-Example 4 | 20000 | >100000 | -* | 6000 | 2800 | 2.1 | 300 |
| Comparative Mixing-Example 5 | 15000 | >100000 | -* | 3000 | 2000 | 1.5 | 200 |
| Comparative Mixing-Example 6 | 15000 | >100000 | -* | 3000 | 2100 | 1.4 | <100 |

| | | | | | | | |
|---|---|---|---|---|---|---|---|
| *: Viscosity of 6 rpm. and/or 60 rpm. could not be determined. Therefore, TI Values could not be calculated. | | | | | | | |

As shown in Tables 1 and 2, the non-aqueous paint of Reference Mixing-Examples, which are explanatory for the present invention have higher viscosity and higher limit of layer-thickness for liquid dripping prevention than the non-aqueous paint of the mixing examples which do not apply the present invention, before or after diluting them by the solvent. Therefore, it is indicated that the powdery thixotropy-imparting agent for the non-aqueous paint and the non-aqueous paint including it as the present invention imparts excellent thickening properties and/or liquid dripping prevention properties and thixotropy properties to a non-aqueous paint even if they are diluted by the non-aqueous solvent or are diluted by no solvent, and thereby being capable of modifying and improving the properties of the paint composition.

### Industrial Applicability

The powdery thixotropy-imparting agent for the non-aqueous paint and the non-aqueous paint including it as the present invention can be used so as to be applied and becoming a thick layer and prevents from liquid dripping when applying it on a vertical surface.

## Claims

1. A powdery thixotropy-imparting agent for a non-aqueous paint comprising:
an amide compound (A) in which a primary diamine having 2-8 carbon atoms, and a hydrogenated castor oil fatty acid and/or an aliphatic monocarboxylic acid having 4-18 carbon atoms, are condensed,
a non-amide wax component (B), which is selected from the group consisting of a microcrystalline wax, hydrogenated castor oil and a polyolefin wax, has at least 70 °C of a softening point and an acid value of 10 or less, and
a polymer (C) having a polar functional group selected from the group consisting of a hydroxyl group, a carboxyl group or an amino group, and a substituent having any ones of them, which is selected from the group consisting of oxidated poly olefine, polyol, polyether, poly-carboxylic acid, polyamine, polyester, polyphosphoric acid,
and polysulfonic acid. and has 1,000-1 00,000 of weight average molecular weight based on polystyrene conversion, and
the powdery thixotropy-imparting agent for imparting thickening properties and/or liquid dripping prevention properties, and thixotropic properties and wherein
the amide compound (A) is 1-95 % by mass, the non-amide wax component (B) is 1-95 % by mass and the polymer (C) having the polar functional group is 0.1-10% by mass, all which are based on mass by the sum of the amide compound (A), the non-amide wax component (B) and the polymer (C) having the polar functional group, and
the mixture of the amide compound (A), the non-amide wax component (B) and the polymer (C) having the polar functional group, has an acid value of 30 or less and an amine value of 20 or less.

2. The powdery thixotropy-imparting agent for the non-aqueous paint according to claim 1, wherein the powdery thixotropy-imparting agent contains powder consisting of a fusion-mixed product of the amide compound (A) and the non-amide wax component (B) and the polymer (C) having the polar functional group.

3. The powdery thixotropy-imparting agent for the non-aqueous paint according to claim 1, wherein the primary diamine is ethylene diamine, 1,4-diaminobutane, hexamethylene diamine and/or xylene diamine.

4. The powdery thixotropy-imparting agent for the non-aqueous paint according to claim 1, wherein the non-amide wax component (B) has a softening point of 70 -120 °C and an acid value of 10 or less.

5. The powdery thixotropy-imparting agent for the non-aqueous paint according to claim 4, wherein the non-amide wax component (B) has an acid value of 0-5.

6. Use of the powdery thixotropy-imparting agent according to claim 1, in a non-aqueous paint which contains any one of solvents selected from the group consisting of non-alcoholic organic solvents and alcohol solvents, or contains no solvent.

7. A method for preparing a powdery thixotropy-imparting agent for a non-aqueous paint comprising:
a step of mixing through heating and melting an amide compound (A) in which a primary diamine having 2-8 carbon atoms, and a hydrogenated castor oil fatty acid and/or an aliphatic monocarboxylic acid having 4-18 carbon atoms are condensed, and a non-amide wax component (B) which is selected from the group consisting of a microcrystalline wax, hydrogenated castor oil and a polyolefin wax, has at least 70 °C of a softening point and an acid value of 10 or less, and a polymer (C) having a polar functional group selected from the group consisting of a hydroxyl group, a carboxyl group or an amino group, and a substituent having any ones of them, which is selected from the group consisting of oxidated poly olefine, polyol, polyether, poly-carboxylic acid. polyamine, polyester, polyphosphoric acid, and polysulfonic acid, and has 1,000-100,000 of weight average molecular weight based on polystyrene conversion, and then.
a step of cooling them to become a cooling product thereof and
a step of pulverizing the cooling product to prepare the powdery thixotropy-imparting agent for the non-aqueous paint,
wherein
the amide compound (A) is 1-95 % by mass, the non-amide wax component (B) is 1-95 % by mass and the polymer (C) having the polar functional group is 0.1-10% by mass, all which are based on mass by the sum of the amide compound (A), the non-amide wax component (B) and the polymer (C) having the polar functional group, and
the mixture of the amide compound (A), the non-amide wax component (B) and the polymer (C) having the polar functional group, has an acid value of 30 or less and an amine value of 20 or less.

8. A non-aqueous paint composition comprising:
the powdery thixotropy-imparting agent for the non-aqueous paint according to claim 1 and nonaqueous-type paint ingredients, and
further comprising any one of solvents selected from the group consisting of non-alcoholic organic solvents and alcohol solvents or comprising no solvent.

## Patentansprüche

1. Pulveriges, Thixotropie verleihendes Mittel für einen nichtwässrigen Lack, umfassend:
eine Amidverbindung (A), in der ein primäres Diamin mit 2-8 Kohlenstoffatomen und eine hydrierte Rizinusölfettsäure und/oder eine aliphatische Monocarbonsäure mit 4-18 Kohlenstoffatomen kondensiert sind,
eine Nicht-Amid-Wachskomponente (B), die aus der aus einem mikrokristallinen Wachs, hydriertem Rizinusöl und einem Polyolefinwachs bestehenden Gruppe ausgewählt ist, einen Erweichungspunkt von mindestens 70 °C und einen Säurewert von 10 oder weniger hat, und
ein Polymer (C) mit einer polaren funktionellen Gruppe, die aus der aus einer Hydroxylgruppe, einer Carboxylgruppe oder einer Aminogruppe bestehenden Gruppe ausgewählt ist, und mit einem Substituenten mit beliebigen dieser Gruppen, wobei das Polymer aus der aus oxidiertem Polyolefin, Polyol, Polyether, Polycarbonsäure, Polyamin, Polyester, Polyphosphorsäure und Polysulfonsäure bestehenden Gruppe ausgewählt ist und ein gewichtsgemitteltes Molekulargewicht von 1.000 bis 100.000 hat, basierend auf der Polystyrolumrechnung, und
wobei das pulverige, Thixotropie verleihende Mittel dazu dient, Verdickungseigenschaften und/oder Eigenschaften zur Verhinderung des Abtropfens von Flüssigkeit sowie thixotrope Eigenschaften zu verleihen, und
wobei die Amidverbindung (A) 1-95 Masse-% ausmacht, die Nicht-Amid-Wachskomponente (B) 1-95 Masse-% ausmacht und das Polymer (C) mit der polaren funktionellen Gruppe 0,1-10 Masse-% ausmacht, die alle auf die Masse geteilt durch die Summe der Amidverbindung (A), der Nicht-Amid-Wachskomponente (B) und des Polymers (C) mit der polaren funktionellen Gruppe bezogen sind, und
wobei die Mischung aus der Amidverbindung (A), der Nicht-Amid-Wachskomponente (B) und dem Polymer (C) mit der polaren funktionellen Gruppe einen Säurewert von 30 oder weniger und einen Aminwert von 20 oder weniger hat.

2. Pulveriges, Thixotropie verleihendes Mittel für den nichtwässrigen Lack nach Anspruch 1, wobei das pulverige, Thixotropie verleihende Mittel ein Pulver enthält, das aus einem durch Schmelzen vermischten Produkt aus der Amidverbindung (A) und der Nicht-Amid-Wachskomponente (B) und dem Polymer (C) mit der polaren funktionellen Gruppe besteht.

3. Pulveriges, Thixotropie verleihendes Mittel für den nichtwässrigen Lack nach Anspruch 1, wobei es sich bei dem primären Diamin um Ethylendiamin, 1,4-Diaminobutan, Hexamethylendiamin und/oder Xyloldiamin handelt.

4. Pulveriges, Thixotropie verleihendes Mittel für den nichtwässrigen Lack nach Anspruch 1, wobei die Nicht-Amid-Wachskomponente (B) einen Erweichungspunkt von 70-120 °C und einen Säurewert von 10 oder weniger hat.

5. Pulveriges, Thixotropie verleihendes Mittel für den nichtwässrigen Lack nach Anspruch 4, wobei die Nicht-Amid-Wachskomponente (B) einen Säurewert von 0-5 hat.

6. Verwendung des pulverigen, Thixotropie verleihenden Mittels nach Anspruch 1 bei einem nichtwässrigen Lack, der eines der Lösungsmittel enthält, die aus der aus nicht-alkoholischen organischen Lösungsmitteln und alkoholischen Lösungsmitteln bestehenden Gruppe ausgewählt sind, oder kein Lösungsmittel enthält.

7. Verfahren zur Herstellung eines pulverigen, Thixotropie verleihenden Mittels für einen nichtwässrigen Lack, mit den folgenden Schritten:
einem Schritt, bei dem eine Amidverbindung (A), in der ein primäres Diamin mit 2-8 Kohlenstoffatomen und eine hydrierte Rizinusölfettsäure und/oder eine aliphatische Monocarbonsäure mit 4-18 Kohlenstoffatomen kondensiert sind, und eine Nicht-Amid-Wachskomponente (B), die aus der aus einem mikrokristallinen Wachs, hydriertem Rizinusöl und einem Polyolefinwachs bestehenden Gruppe ausgewählt ist, einen Erweichungspunkt von mindestens 70 °C und einen Säurewert von 10 oder weniger hat, und ein Polymer (C) mit einer polaren funktionellen Gruppe, die aus der aus einer Hydroxylgruppe, einer Carboxylgruppe oder einer Aminogruppe bestehenden Gruppe ausgewählt ist, und mit einem Substituenten mit beliebigen dieser Gruppen, wobei das Polymer aus der aus oxidiertem Polyolefin, Polyol, Polyether, Polycarbonsäure, Polyamin, Polyester, Polyphosphorsäure und Polysulfonsäure bestehenden Gruppe ausgewählt ist und ein gewichtsgemitteltes Molekulargewicht von 1.000 bis 100.000 hat, basierend auf der Polystyrolumrechnung, durch Erhitzen und Schmelzen gemischt werden, und dann
einem Schritt, bei dem sie zu einem Kühlprodukt davon abgekühlt werden, und
einem Schritt, bei dem das Kühlprodukt pulverisiert wird, um das pulverige, Thixotropie verleihende Mittel für den nichtwässrigen Lack herzustellen,
wobei
die Amidverbindung (A) 1-95 Masse-% ausmacht, die Nicht-Amid-Wachskomponente (B) 1-95 Masse-% ausmacht und das Polymer (C) mit der polaren funktionellen Gruppe 0,1-10 Masse-% ausmacht, die alle auf die Masse geteilt durch die Summe der Amidverbindung (A), der Nicht-Amid-Wachskomponente (B) und des Polymers (C) mit der polaren funktionellen Gruppe bezogen sind, und
die Mischung aus der Amidverbindung (A), der Nicht-Amid-Wachskomponente (B) und dem Polymer (C) mit der polaren funktionellen Gruppe einen Säurewert von 30 oder weniger und einen Aminwert von 20 oder weniger hat.

8. Nichtwässrige Lackzusammensetzung, umfassend:
das pulverige, Thixotropie verleihende Mittel für den nichtwässrigen Lack nach Anspruch 1 und Lackbestandteile von nichtwässriger Art, und
ferner umfassend eines der Lösungsmittel, die aus der aus nichtalkoholischen organischen Lösungsmitteln und alkoholischen Lösungsmitteln bestehenden Gruppe ausgewählt sind, oder ohne ein Lösungsmittel.

## Revendications

1. Agent pulvérulent conférant une thixotropie pour une peinture non aqueuse comprenant :
un composé d'amide (A) dans lequel une diamine primaire ayant 2 à 8 atomes de carbone, et un acide gras d'huile de ricin hydrogénée et/ou un acide monocarboxylique aliphatique ayant 4 à 18 atomes de carbone, sont condensés, un composant de type cire non-amide (B), qui est sélectionné parmi le groupe constitué d'une cire microcristalline, d'une huile de ricin hydrogénée et d'une cire de polyoléfine, présente un point de ramollissement d'au moins 70 °C et un indice d'acide de 10 ou moins, et un polymère (C) ayant un groupe fonctionnel polaire sélectionné parmi le groupe constitué d'un groupe hydroxyle, d'un groupe carboxyle ou d'un groupe amino, et d'un substituant contenant l'un quelconque de ceux-ci, qui est sélectionné parmi le groupe constitué d'une polyoléfine oxydée, d'un polyol, d'un polyéther, d'un polyacide carboxylique, d'une polyamine, d'un polyester, d'un polyacide phosphorique, et d'un polyacide sulfonique, et présente un poids moléculaire moyen en poids de 1000 à 100 000 sur la base d'une conversion en polystyrène, et l'agent pulvérulent conférant une thixotropie pour conférer des propriétés épaississantes et/ou des propriétés de prévention d'égouttement de liquide, et des propriétés thixotropes et dans lequel
le composé d'amide (A) représente 1 à 95 % en masse, le composant de type cire non-amide (B) représente 1 à 95 % en masse et le polymère (C) ayant le groupe fonctionnel polaire représente 0,1 à 10 % en masse, tous étant basés sur la masse par la somme du composé d'amide (A), du composant de type cire non-amide (B) et du polymère (C) ayant le groupe fonctionnel polaire, et
le mélange du composé d'amide (A), du composant de type cire non-amide (B) et du polymère (C) ayant le groupe fonctionnel polaire présente un indice d'acide de 30 ou moins et un indice d'amine de 20 ou moins.

2. Agent pulvérulent conférant une thixotropie pour la peinture non aqueuse selon la revendication 1, dans lequel l'agent pulvérulent conférant une thixotropie contient une poudre constituée d'un produit mélangé par fusion du composé d'amide (A) et du composant de type cire non-amide (B) et du polymère (C) ayant le groupe fonctionnel polaire.

3. Agent pulvérulent conférant une thixotropie pour la peinture non aqueuse selon la revendication 1, dans lequel la diamine primaire est l'éthylènediamine, le 1,4-diaminobutane, l'hexaméthylène diamine et/ou la xylènediamine.

4. Agent pulvérulent conférant une thixotropie pour la peinture non aqueuse selon la revendication 1, dans lequel le composant de type cire non-amide (B) présente un point de ramollissement de 70 à 120 °C et un indice d'acide de 10 ou moins.

5. Agent pulvérulent conférant une thixotropie pour la peinture non aqueuse selon la revendication 4, dans lequel le composant de type cire non-amide (B) présente un indice d'acide de 0 à 5.

6. Utilisation de l'agent pulvérulent conférant une thixotropie selon la revendication 1, dans une peinture non aqueuse qui contient l'un quelconque des solvants sélectionnés parmi le groupe constitué des solvants organiques non alcooliques et des solvants de type alcool, ou ne contient aucun solvant.

7. Procédé de préparation d'un agent pulvérulent conférant une thixotropie pour une peinture non aqueuse comprenant :
une étape de mélange par chauffage et fusion d'un composé d'amide (A) dans lequel une diamine primaire ayant 2 à 8 atomes de carbone, et un acide gras d'huile de ricin hydrogénée et/ou un acide monocarboxylique aliphatique ayant 4 à 18 atomes de carbone sont condensés, et d'un composant de type cire non-amide (B) qui est sélectionné parmi le groupe constitué d'une cire microcristalline, d'une huile de ricin hydrogénée et d'une cire de polyoléfine, présentant un point de ramollissement d'au moins 70 °C et un indice d'acide de 10 ou moins, et d'un polymère (C) ayant un groupe fonctionnel polaire sélectionné parmi le groupe constitué d'un groupe hydroxyle, d'un groupe carboxyle ou d'un groupe amino, et un substituant ayant l'un quelconque de ceux-ci, qui est sélectionné parmi le groupe constitué d'une polyoléfine oxydée, d'un polyol, d'un polyéther, d'un polyacide carboxylique, d'une polyamine, d'un polyester, d'un polyacide phosphorique, et d'un polyacide sulfonique, et présentant un poids moléculaire moyen en poids de 1000 à 100 000 sur la base d'une conversion en polystyrène, et ensuite
une étape de refroidissement de ceux-ci pour devenir un produit de refroidissement de ceux-ci et
une étape de pulvérisation du produit de refroidissement pour préparer l'agent pulvérulent conférant une thixotropie pour la peinture non aqueuse,
dans lequel
le composé d'amide (A) représente 1 à 95 % en masse, le composant de type cire non-amide (B) représente 1 à 95 % en masse et le polymère (C) ayant le groupe fonctionnel polaire représente 0,1 à 10 % en masse, tous étant basés sur la masse par la somme du composé d'amide (A), du composant de type cire non-amide (B) et du polymère (C) ayant le groupe fonctionnel polaire, et
le mélange du composé d'amide (A), du composant de type cire non-amide (B) et du polymère (C) ayant le groupe fonctionnel polaire présente un indice d'acide de 30 ou moins et un indice d'amine de 20 ou moins.

8. Composition de peinture non aqueuse comprenant :
l'agent pulvérulent conférant une thixotropie pour la peinture non aqueuse selon la revendication 1 et des ingrédients de peinture de type non aqueux, et
comprenant en outre l'un quelconque des solvants sélectionnés parmi le groupe constitué des solvants organiques non alcooliques et des solvants de type alcool, ou ne comprenant aucun solvant.
